# EUROPEAN PATENT APPLICATION

(11) **EP 2 947 553 A1**
(43) Date of publication of application: **25.11.2015**
(21) Application number: 15161021.9
(22) Date of filing: 26.03.2015
(51) Int. Cl.: G06F 3/041, G06F 3/0488

(54) **Touch input control method and device**

(30) Priority: 22.05.2014 CN 201410219188
(71) Applicant: Xiaomi Inc., Beijing 100085 (CN)
(72) Inventor: Zhang, Bo, Haidian District, Beijing (CN); Zhu, Ling, Haidian District,Beijing (CN); Yang, Kun, Haidian District, Beijing (CN)
(74) Representative: Hanna, Peter William Derek

(57) **Abstract**

The present disclosure relates to a touch input control device and method. The touch input method includes: identifying (101) edge touch information at the fringe area of a terminal touch screen; according to the touch shape corresponding to the edge touch information, judging (102) whether the edge touch information includes edge palm touch information generated by palm touch operation; and shielding (103) the edge palm touch information if the edge touch information includes the edge palm touch information. The present disclosure can, according to the touch shape corresponding to the edge touch information, judge that the edge touch information includes the edge palm touch information, thereby shielding only touch information input by mistake which is caused by palm touch operation, keeping correct touch information generated by finger touch operation in the fringe area, thus improving the accuracy of touch input.

## Description

### TECHNICAL FIELD

The present disclosure generally relates to the field of intelligent terminals, and more particularly, to a touch input control method and device.

### BACKGROUND

Along with the development and popularization of intelligent terminals, a terminal usually uses TP (Touch Panel, Touch Screen Assembly) to provide users with touch input function, and a capacitive touch sensor is integrated into TP so that the terminal may realize multi-point touch human-computer interaction, TP being usually referred to as the touch screen. In order to enhance users' touch experience, the terminal touch screen frame is decreasing so as to provide users with a wider touch area. However, as the terminal touch screen frame is decreasing, users' non-finger tip parts (for example, palm part connected to thumb) may likely touch the touch screen when they hold the terminal, so, touch information generated by misoperation is obtained and reported to the terminal via a Touch IC (Touch Integrated Circuit) chip.

In related technologies, areas of the touch screen prone to user misoperation may be set; when users touch these areas, Touch IC may shield the touch information obtained from these areas. However, presetting anti-misoperation areas also correspondingly shields touch information generated by normal operation of users' fingers on these areas in addition to prevention of touch information generated by misoperation, thus leading to low accuracy of touch input.

### SUMMARY

The present invention provides a touch input control method and device in accordance with claims which follow, so as to solve the problem in related technologies that touch input accuracy is low because touch information generated by normal operation is also shielded in prevention of touch information generated by misoperation.

According to the first aspect of the embodiment in the disclosure, a touch input control method is provided, including:
identifying edge touch information at the fringe area of a terminal touch screen;
according to the touch shape corresponding to the edge touch information, judging whether the edge touch information includes edge palm touch information generated by palm touch operation; and
shielding the edge palm touch information if the edge touch information includes the edge palm touch information.
Optionally, the identifying edge touch information at the fringe area of the terminal touch screen includes:
obtaining touch information generated by the touch operation when users execute the touch operation on the terminal touch screen;
according to the position coordinate corresponding to the touch information, judging whether the touch operation is in the fringe area of the touch screen; and
determining the touch information as the edge touch information if the touch operation is in the fringe area of the touch screen.

Optionally, the according to the touch shape corresponding to the edge touch information, judging whether the edge touch information includes edge palm touch information generated by palm touch operation includes:
obtaining the touch shape corresponding to the edge touch information by means of touch spot distribution of touch operation on the fringe area;
judging whether the touch shape corresponding to the edge touch information is matched with the palm touch shape preset; and
determining that the edge touch information includes the edge palm touch information if the touch shape corresponding to the edge touch information is matched with the palm touch shape.

Optionally, the shielding the edge palm touch information includes:
determining a corresponding subarea of the edge palm touch information on the fringe area; and
disabling the touch input function of the corresponding subarea.

Optionally, the determining a corresponding subarea of the edge palm touch information on the fringe area includes:
comparing the position coordinate of the edge palm touch information with the coordinate range of each subarea in the fringe area; and
determining a first subarea corresponding to the coordinate range of the position coordinate as the corresponding subarea.

Optionally, the determining a corresponding subarea of the edge palm touch information on the fringe area also includes:
determining a second subarea associated with the first subarea as the corresponding subarea, the second subarea being a subarea in which a finger touch operation corresponding to the palm touch operation is when the terminal is held.

Optionally, the determining a corresponding subarea of the edge palm touch information on the fringe area includes:
judging whether the duration of the palm touch operation on the touch screen is in excess of the preset time; and
determining a corresponding subarea of the edge palm touch information on the fringe area if the duration is in excess of the preset time.

Optionally, the method also includes:
clearing other palm touch information generated in the process of palm touch operation exclusive of the edge palm touch information.

Optionally, the method also includes:
detecting the finger touch operation area on the touch screen in holding the terminal;
outputting a virtual touch control interface in the finger touch operation area.

According to a second aspect of embodiments in the disclosure, a touch input control device is provided, including:
an identification unit configured to identify edge touch information at the fringe area of the terminal touch screen;
a judgment unit configured to judge whether the edge touch information includes palm touch information generated by palm touch operation according to the touch shape corresponding to the edge touch information; and
a shielding unit configured to shield the edge palm touch information if the edge touch information includes the edge palm touch information.

Optionally, the identification unit includes:
an information acquisition subunit configured to acquire touch information generated by the touch operation when users execute touch operation on the terminal touch screen;
a position judgment subunit configured to judge whether the touch operation is in the fringe area of the touch screen according to the position coordinate corresponding to the touch information;
an information determination subunit configured to determine the touch information as the edge touch information if the touch operation is in the fringe area of the touch screen.

Optionally, the judgment unit includes:
a shape acquisition subunit configured to obtain the touch shape corresponding to the edge touch information by means of touch spot distribution of touch operation on the fringe area;
a shape match subunit configured to judge whether the touch shape corresponding to the edge touch information is matched with the palm touch shape preset;
a match determination subunit configured to determine that the edge touch information includes the edge palm touch information if the touch shape corresponding to the edge touch information is matched with the palm touch shape.

Optionally, the shielding unit includes:
a determination subunit configured to determine a corresponding subarea of the edge palm touch information on the fringe area;
a disabling subunit configured to disable the touch input function of the corresponding subarea.

Optionally, the determination subunit includes:
a position comparison subunit configured to compare the position coordinate of the edge palm touch information with the coordinate range of each subarea of the fringe area;
a first subarea determination subunit configured to determine a first subarea corresponding to the coordinate range of the position coordinate as the corresponding subarea.

Optionally, the determination subunit also includes:
a second subarea determination subunit configured to determine a second subarea associated with the first subarea as the corresponding subarea, the second subarea being a subarea in which a finger touch operation corresponding to the palm touch operation is in holding the terminal.

Optionally, the determination subunit includes:
a time judgment subunit configured to judge whether the duration of the palm touch operation on the touch screen is in excess of the preset time;
a subarea determination subunit configured to determine a corresponding subarea of the edge palm touch information on the fringe area if the duration is in excess of the preset time.

Optionally, the device also includes:
a clearing unit configured to clear other palm touch information generated in the process of palm touch operation exclusive of the edge palm touch information.

Optionally, the device also includes:
a detecting unit configured to detect the finger touch operation area on the touch screen in holding the terminal;
an output unit configured to output a virtual touch control interface in the finger touch operation area.

According to a third aspect of embodiments in the disclosure, a touch input control device is provided, including:
a processor;
a memory configured to store instruction executable by processor;
wherein, the processor is configured to:
identify edge touch information at the fringe area of a touch screen of a terminal;
according to a touch shape corresponding to the edge touch information, judge whether the edge touch information includes edge palm touch information generated by a palm touch operation; and
shield the edge palm touch information if the edge touch information includes the edge palm touch information.

The technical scheme according to embodiments of the disclosure may have the following beneficial effects:

After identifying the edge touch information at the fringe area of the touch screen, according to the touch shape corresponding to the edge touch information, it is judged that the edge touch information includes the edge palm touch information, thereby only shielding touch information input by mistake which is caused by palm touch operation, keeping correct touch information generated by finger touch operation in the fringe area, thus improving the accuracy of touch input.

After shielding the edge palm touch information, it may be obtained a corresponding subarea of the edge palm information on the fringe area, thus specifically disabling the touch input function of the corresponding subarea, and further improving the accuracy of touch input; wherein, in addition to containing a first subarea corresponding to the coordinate range of the position coordinate according to the edge palm touch information, the corresponding subarea also may contain such a second subarea of the finger touch operation that is associated with the first subarea and corresponding to the palm touch operation, thus ensuring flexible setting of the corresponding subarea according to users' habits of holding the terminal, not only improving the accuracy of touch input, but also enhancing users' touch experience.

When the duration of the edge palm touch information on the touch screen is in excess of the preset time, it may be determined the edge palm touch information as the touch information generated when users are holding the terminal, and then determined the corresponding subarea needed to disable the touch input function, thus identifying the corresponding subarea only while holding the terminal, and thereby improving the accuracy of disabling the touch input function of the corresponding subarea.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a touch input control method according to an exemplary embodiment.
Fig. 2A is a flow chart showing another touch input control method according to an exemplary embodiment.
Fig. 2B is a schematic diagram showing regional division of the terminal touch screen according to an exemplary embodiment.
Fig. 2C is a schematic diagram showing user's holding the terminal according to an exemplary embodiment.
Fig. 2D is a schematic diagram showing the area in which a touch information is according to an exemplary embodiment.
Fig. 2E is a schematic diagram showing the area in which another touch information is according to an exemplary embodiment.
Fig. 2F is a schematic diagram showing the area in which another touch information is according to an exemplary embodiment.
Fig. 2G is a schematic diagram showing a virtual touch control interface on a touch screen according to an exemplary embodiment.
Fig. 3 is a block diagram of a touch input control device according to an exemplary embodiment.
Fig. 4 is a block diagram of another touch input control device according to an exemplary embodiment.
Fig. 5 is a block diagram of another touch input control device according to an exemplary embodiment.
Fig. 6 is a block diagram of another touch input control device according to an exemplary embodiment.
Fig. 7 is a block diagram of another touch input control device according to an exemplary embodiment.
Fig. 8 is a block diagram of another touch input control device according to an exemplary embodiment.
Fig. 9 is a block diagram of another touch input control device according to an exemplary embodiment.
Fig. 10 is a block diagram of another touch input control device according to an exemplary embodiment.
Fig. 11 is a block diagram of a touch input control device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Terms used in the present disclosure are only for the purpose of description of specific embodiments, and are not intended to limit the present disclosure. As used in the present disclosure and appended claims, the singular forms "a/an", "said" and "the" intend to also include the plural form, unless the content clearly dictates otherwise. It should also be understood that the term "and/or" used herein means to include arbitrary and all possible combinations of one or more items listed in association.

It should be understood that terms such as "first", "second", "third" and the like may be used herein for description of information. However, the information shall not be restricted to these terms. These terms are only intended to distinguish among information of the same type. For example, under the circumstance of not departing from the scope of the present disclosure, a first information may also be referred to as a second information, similarly, a second information may also be referred to as a first information. Depending on the context, term "if" used herein may be interpreted as "when", "while" or "in response to determining".

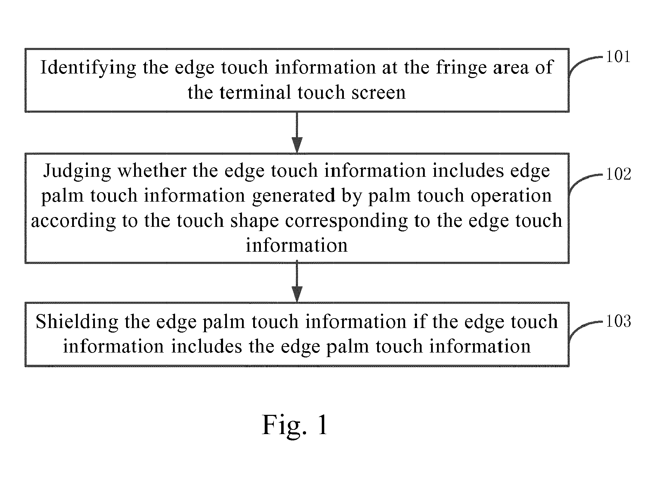

As shown in Fig. 1, which is a flow chart showing a touch screen control method according to an exemplary embodiment; the touch screen control method is used in the terminal, and may include following steps.

In Step 101, it is identified the edge touch information at the fringe area of the terminal touch screen.

The terminal in the present disclosure may refer to all kinds of intelligent terminals that support the touch input. The terminal may be provided with a capacitive touch screen (also known as TP) for supporting multi-point touch input. The capacitive touch screen is a layer of special transparent metal conductive material pasted on the surface of a glass panel. When users conduct touch operation on the metal layer, the capacitor capacitance of operation part's touch spot on the touch screen is changed so that the frequency of an oscillator connected with the capacitor is also changed. The Touch IC chip in the terminal may identify the touch position by measuring the frequency variation, thus obtaining touch information.

A user usually holds the terminal with one hand while making touch input with the other one when using the terminal. As the terminal touch screen frame is decreasing, users' palm part (for example, palm part connected to thumb) may likely touch the fringe area of the touch screen when they hold the terminal. In the present disclosure, the fringe area may be zoned on the touch screen in advance; the fringe area usually refers to narrower area on four sides of the touch screen, and the part excluding the fringe area may be referred to as the central area.

In the embodiment, when users execute the touch operation on the terminal touch screen, the touch information generated by the touch operation may be obtained. The touch information usually may include the position coordinates of touch input (including x-coordinate and y-coordinate), the size of touch area, the touch status (touching, lifting and sliding) and the like. The terminal judges whether the touch operation is within the fringe area of the touch screen according to the position coordinates corresponding to the touch information, and identifies the touch information as the edge touch information if the touch operation is within the fringe area of the touch screen.

In Step 102, it is judged whether the edge touch information includes edge palm touch information generated by palm touch operation according to the touch shape corresponding to the edge touch information.

In the embodiment, the touch operation on the fringe area of the touch screen may form corresponding touch spots on the touch screen, the touch shape corresponding to the edge touch information may be obtained from distribution of these touch spots. Then it is judged whether the touch shape corresponding to the edge touch information is matched with the palm touch shape preset. The edge touch information may be identified as containing the edge palm touch information if the touch shape corresponding to the edge touch information is matched with the palm touch shape.

In Step 103, it is shielded the edge palm touch information if the edge touch information includes the edge palm touch information.

In the embodiment, when shielding the edge palm touch information, a corresponding subarea of the edge palm touch information on the fringe area may be identified. Then it is disabled the touch input function of the corresponding subarea.

In the above embodiment, according to the touch shape corresponding to the edge touch information, it is judged the edge touch information includes the edge palm touch information, thereby shielding only touch information input by mistake which is caused by palm touch operation, keeping correct touch information generated by finger touch operation in the fringe area, thus improving the accuracy of touch input.

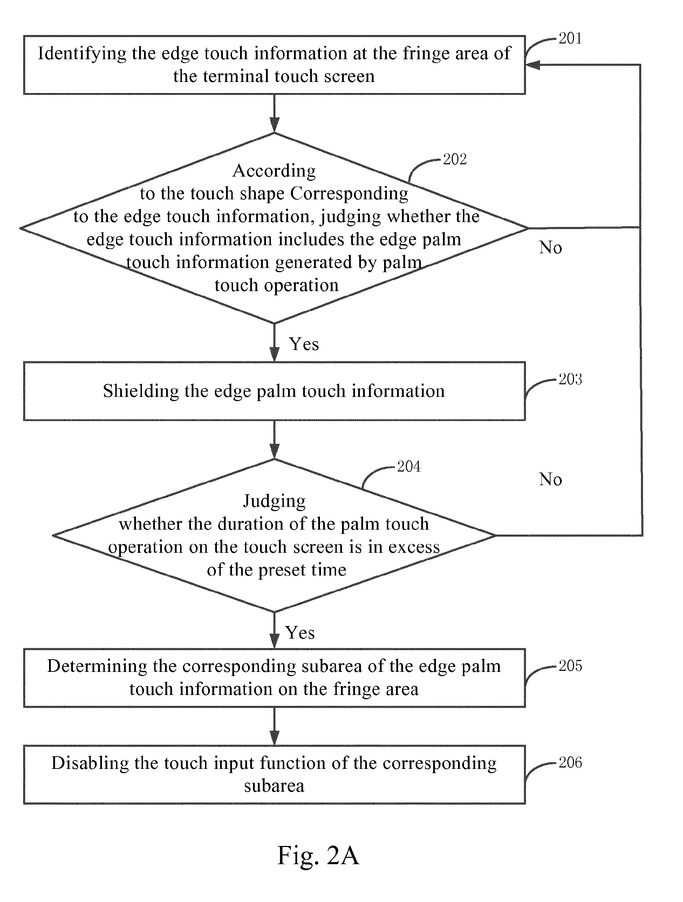

As shown in Fig. 2A, which is a flow chart showing another touch screen control method according to an exemplary embodiment; the touch screen control method may be used in the terminal, including following steps.

In Step 201, it is identified edge touch information at the fringe area of the terminal touch screen.

A user usually holds the terminal with one hand while making touch input with the other one when using the terminal. As the terminal touch screen frame is decreasing, users' palm part (for example, palm part connected to thumb) may likely touch the fringe area of the touch screen when they hold the terminal. In the present disclosure, the fringe area may be zoned on the touch screen in advance; the fringe area usually refers to narrower area on four sides of the touch screen, and the part excluding the fringe area may be referred to as the central area.

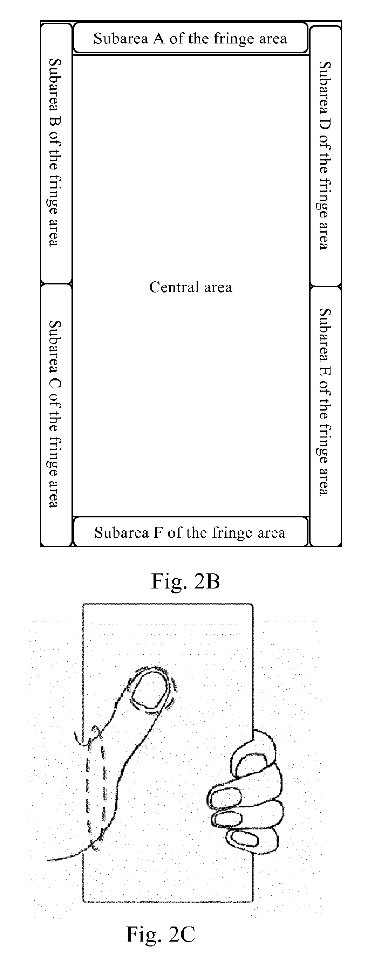

Fig. 2B is a schematic diagram showing regional division of the terminal touch screen according to an exemplary embodiment. In Fig. 2B, the terminal touch screen may be divided into the fringe area and the central area; wherein, based on the possible position of a palm touching the fringe area while holding the terminal, the fringe area may be further subdivided into six subareas, i.e., subarea A, subarea B, subarea C, subarea D, subarea E and subarea F.

In the embodiment, when users execute the touch operation on the terminal touch screen, the touch information generated by the touch operation may be obtained. The touch information usually may include the position coordinates of touch input (including x-coordinate and y-coordinate), the size of touch area, the touch status (touching, lifting and sliding) and the like. The terminal judges whether the touch operation is within the fringe area of the touch screen according to the position coordinates corresponding to the touch information, and identifies the touch information as the edge touch information if the touch operation is within the fringe area of the touch screen. In combination with Fig. 2B, the touch information may be identified as the edge touch information if the terminal judges that the touch operation is in any one from subarea A to subarea F according to the position coordinate corresponding to the touch information.

In Step 202, according to the touch shape corresponding to the edge touch information, it is judged whether the edge touch information includes the edge palm touch information generated by palm touch operation; proceeds to Step 203 if the edge touch information includes the edge palm touch information, or return to Step 201 if not.

In the embodiment, the touch operation on the fringe area of the touch screen may form corresponding touch spots on the touch screen, the touch shape corresponding to the edge touch information may be obtained from distribution of these touch spots. Then it is judged whether the touch shape corresponding to the edge touch information is matched with the palm touch shape preset. The edge touch information may be identified as containing the edge palm touch information if the touch shape corresponding to the edge touch information is matched with the palm touch shape.

Fig. 2C is a schematic diagram showing a user holding the terminal according to an exemplary embodiment of the present disclosure. In Fig. 2C, the user holds the terminal with the left hand, with the palm part touching the fringe area of the touch screen and forming touch spots on the fringe area. The contour of the touch spot distribution is as shown in an oval marked with dashed lines on the palm part in Fig.2C. Touch spots are formed in the central area by the thumb tip. The contour of the touch spot distribution is a circle marked with dashed lines at the thumb tip in Fig.2C. Thus it may be known that at least the palm touch operation and the finger touch operation may be distinguished according to the shape corresponding to the touch information.

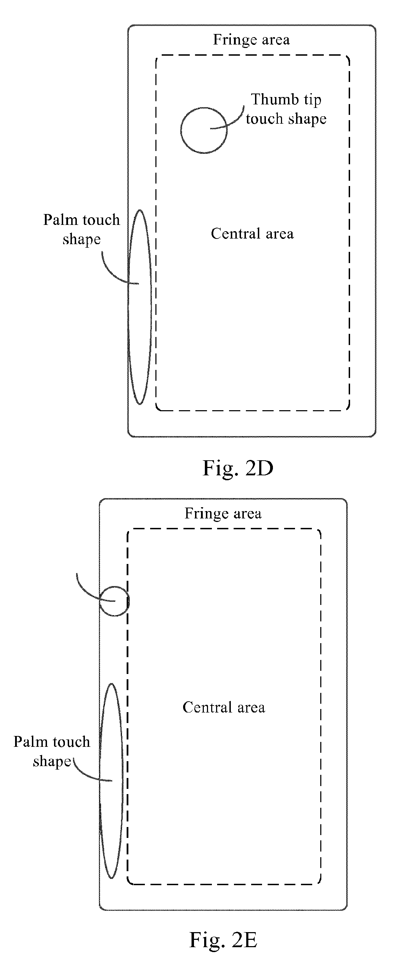

Fig.2D is a schematic diagram showing the area in which the touch information is according to an exemplary embodiment. According to the way in which the terminal is held in the palm in Fig. 2C, a corresponding Fig.2D is obtained. The terminal obtains from the fringe area of the touch screen the corresponding oval touch shape in case that the touch screen is touched by the palm part, and obtains from the central area of the touch screen the circular touch shape in case that the touch screen is touched by the thumb tip. Therefore, in the present disclosure, touch shapes (for example, the oval palm touch shape as shown in Fig.2D and the circular finger touch shape as shown in Fig.2D) may be preset according to the fact that different hand parts are corresponding to different touch shapes in operating on the touch screen.

Thus it may be known that, when a user holds the terminal in the way as shown in Fig.2C, in combination with examples of Fig.2C and Fig.2D, after obtaining the touch shape corresponding to the edge touch information, the terminal may compare the touch shape obtained with the touch shape preset, thus determine the type of the edge touch information. In combination with Fig.2D, the edge touch information obtained may be identified as the edge palm touch information if such the touch shape corresponding to the edge touch information as obtained by the terminal is matched with the oval preset in size and in shape.

Different from Fig.2D, in another possible application scenario, different users have different habits of holding the terminal, in addition of the palm part, the thumb tip may also touch the fringe area. Fig.2E is a schematic diagram showing the area in which another edge touch information is according to an exemplary embodiment. The difference between Fig.2E and Fig.2D exists in that in Fig.2E, the corresponding circular touch shape is within the fringe area when the thumb tip touches the touch screen.

In Step 203, it is shielded the edge palm touch information.

When the judgment result of Step 203 is that the edge touch information includes the edge palm touch information, directly shield the edge palm touch information, i.e., not reporting the edge palm touch information. In combination with Fig.2D and Fig.2E, the terminal may shield the edge palm touch information as expressed by the oval on the fringe area of the touch screen as shown in these drawings. The difference exists in that in Fig.2D, the touch information corresponding to thumb tip operation is within the central area, while in Fig.2E, the touch information corresponding to thumb tip operation is within the fringe area. However, in either case, the application of the embodiment of the present disclosure may only shield the edge palm touch information instead of normal touch input information within any area on the touch screen.

It should be noted that, when a user is holding the terminal, the palm part may directly hold the fringe area of the terminal, and under the circumstances, the edge palm touch information identified is not reported, thus shielding the edge palm touch information. However, if the palm part slides a certain distance on the touch screen before holding the terminal edge, the palm part may generate the palm touch information in the central area of the touch screen during sliding. This palm touch information is useless for touch operation. Therefore, other palm touch information (excluding the edge palm touch information) generated during the palm touch operation may be removed by reporting the status information with regard to the palm touch information. The status information may include information related to lifting of position coordinate in the palm touch information, or information related to position coordinate sliding out of the touch screen.

In Step 204, it is judged whether the duration of the palm touch operation on the touch screen is in excess of the preset time, proceed to Step 205 if the duration is in excess of the preset time, or return to Step 201 otherwise.

In the embodiment, in consideration that the palm may touch the fringe area for a long time when the user is holding the terminal, or may occasionally touch the fringe area when the user is conducting other touch operation on the terminal. Therefore, the Step may further judge whether the duration of the palm touch information on the touch screen is in excess of the preset time, which defines the possible minimum time of user's holding the terminal, thus identifying whether the palm touch information is generated by holding the terminal so as to further determine whether to disable the touch function of the corresponding subarea on the fringe area.

In Step 205, it is determined the corresponding subarea of the edge palm touch information on the fringe area.

In the present disclosure, it is compared the position coordinates of the edge palm touch information with the coordinate range in each subarea of the fringe area, determined the first subarea corresponding to the range of the position coordinate as the corresponding subarea, and determined the second subarea associated with the first subarea as the corresponding subarea. The second subarea is a subarea in which the finger touch operation corresponding to the palm touch operation is in holding the terminal. It should be noted that, in addition to such modes for identifying the corresponding subarea as shown above, in actual application, other modes for identifying the corresponding subarea may also be used according to need, to which the present disclosure makes no restriction.

In combination with Figs.2B-2E, if the duration of the edge palm touch information (oval) on the fringe area is in excess of the preset time, it may be known according to subareas divided from the fringe area in Fig.2B that the corresponding subarea of the edge palm touch information is identified as subarea C by comparison of position coordinates.

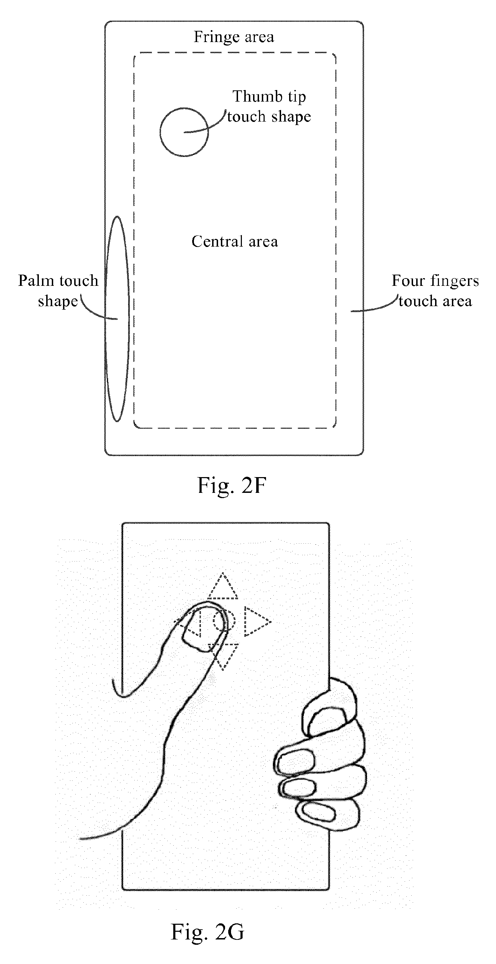

Fig.2F is a schematic diagram showing the area in which another touch information is according to an exemplary embodiment. In combination with Fig.2C, when a left hand is holding the terminal, the palm part holds the left fringe area of the terminal, besides, other four fingers of the left hand may hold the right fringe area of the terminal, as shown in Fig.2C. Thus, after identifying the subarea C corresponding to the edge palm touch information, the subarea E relative to the subarea C may be directly obtained as an associated subarea, which is a subarea in which the finger touch operation corresponding to the palm touch operation is.

In Step 206, it is disabled the touch input function of the corresponding subarea and terminated the current workflow.

It may be known from above embodiments that, after identifying the edge touch information at the fringe area of the touch screen, according to the touch shape corresponding to the edge touch information, it is judged that the edge touch information includes the edge palm touch information, thereby shielding only touch information input by mistake which is caused by palm touch operation, keeping correct touch information generated by finger touch operation in the fringe area, thus improving the accuracy of touch input. Besides, the corresponding subarea on the fringe area according to the edge palm touch information may be obtained after shielding the edge palm touch information, thus specifically disabling the touch input function of the corresponding subarea and further improving the accuracy of touch input, thus ensuring flexible setting of the corresponding subarea according to users' habits of holding the terminal, not only improving the accuracy of touch input, but also enhancing users' touch experience. In addition, that identifying corresponding subareas is only available in holding the terminal, thus improving the accuracy of disabling the touch input function of subareas.

On the basis of embodiments as shown in foregoing Fig.1 and Fig.2, in another optional embodiment, in combination with Figs.2D-2F, after detecting the touch operation area (the circular area as shown in Fig.2D) on the touch screen according to thumb touch operation, the virtual touch control interface may be displayed nearby the circular area so that users may conduct input operations of all kinds with thumb, thus realizing touch input control of the whole touch screen. Fig. 2G is a schematic diagram showing a virtual touch control interface on a touch screen according to an exemplary embodiment. In Fig. 2G, a virtual touch control icon is displayed in the touch operation area nearby the thumb tip, taking a sliding control button icon as an example of the virtual touch control icon. It should be noted that, Fig.2G only shows an example of the virtual touch control interface outputted in the thumb touch operation area. In actual application, any finger touch operation area on the touch screen is detected according to information (for example, area of touch, touch shape and the like) when the user is holding the terminal, and the touch control interface is outputted in the above area detected, to which the embodiment of the present disclosure makes no restriction.

Corresponding to the embodiment of the foregoing touch input control method, the present disclosure also provides an embodiment of a touch input control device and terminal thereof.

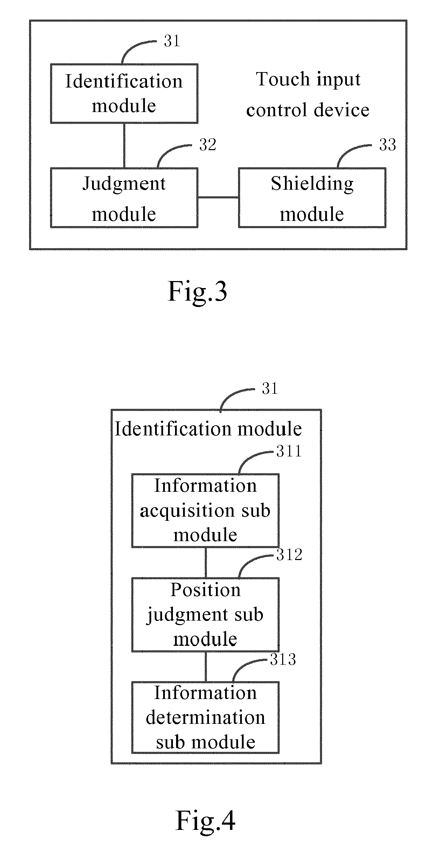

As shown in Fig. 3, which is a block diagram of a touch input control device according to an exemplary embodiment, the device includes: an identification module 31, a judgment module 32 and a shielding module 33.

Wherein, the identification module 31 is configured for identifying edge touch information at the fringe area of the terminal touch screen.

The judgment module 32 is configured for judging whether the edge touch information includes palm touch information generated by palm touch operation according to the touch shape corresponding to the edge touch information.

The shielding module 33 is configured for shielding the edge palm touch information if the edge touch information includes the edge palm touch information.

In above embodiments, after identifying the edge touch information at the fringe area of the touch screen, according to the touch shape corresponding to the edge touch information, it is judged that the edge touch information includes the edge palm touch information, thereby shielding only touch information input by mistake which is caused by palm touch operation, keeping correct touch information generated by finger touch operation in the fringe area, thus improving the accuracy of touch input.

As shown in Fig. 4, which is a block diagram of another touch input control device according to an exemplary embodiment of the present disclosure, the embodiment is on the basis of the embodiment as shown in the foregoing Fig.3, and the identification module 31 may include: an information acquisition sub module 311, a position judgment sub module 312 and an information determination sub module 313.

Wherein, the information acquisition sub module 313 is configured for acquiring touch information generated by the touch operation when users conduct touch operation on the terminal touch screen.

The position judgment sub module 312 is configured for judging whether the touch operation is in the fringe area of the touch screen according to the position coordinate corresponding to the touch information.

The information determination sub module 312 is configured to determine the touch information as the edge touch information if the touch operation is in the fringe area of the touch screen.

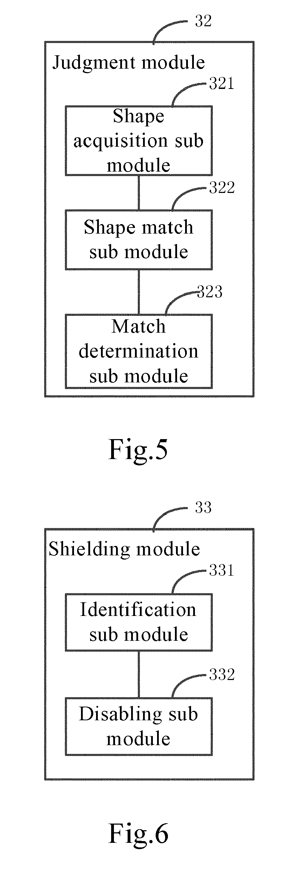

As shown in Fig. 5, which is a block diagram of another touch input control device according to an exemplary embodiment of the present disclosure, the embodiment is on the basis of the embodiment as shown in the foregoing Fig.3, and the judgment module 32 may include: a shape acquisition sub module 321, a shape match sub module 322 and a match determination sub module 323.

Wherein, the shape acquisition sub module 321 is configured for obtaining the touch shape corresponding to the edge touch information by means of touch spot distribution of touch operation on the fringe area.

The shape match sub module 322 is configured for judging whether the touch shape corresponding to the edge touch information is matched with the palm touch shape preset.

The match determination sub module 323 is configured to determine the edge touch information includes the edge palm touch information if the touch shape corresponding to the edge touch information is matched with the palm touch shape.

It should be noted that, the structure of the judgment module 32 in the device embodiment as shown in above Fig.5 may be contained in the device embodiment as shown in foregoing Fig.4, to which the present disclosure makes no restriction.

In the above embodiment, according to the touch shape corresponding to the edge touch information determined from touch spot distribution, it is judged that the edge touch information includes the edge palm touch information, thereby shielding only touch information input by mistake which is caused by palm touch operation, and keeping correct touch information generated by finger touch operation in the fringe area, thus improving the accuracy of touch input.

As shown in Fig. 6, which is a block diagram of another touch input control device according to an exemplary embodiment of the present disclosure, the embodiment is on the basis of the embodiment as shown in the foregoing Fig.3, and the shielding module 33 may include: a determination sub module 331 and a disabling sub module 332.

Wherein, the determination sub module 331 is configured to determine a corresponding subarea of the edge palm touch information on the fringe area.

The disabling sub module 332 is configured for disabling the touch input function of the corresponding subarea.

It should be noted that, the determination sub module 331 and the disabling sub module 332 in the device embodiment as shown in above Fig.6 may be contained in the device embodiment as shown in the foregoing Fig.4 or Fig.5, to which the present disclosure makes no restriction.

In the above embodiment, when shielding the edge palm touch information, such a corresponding subarea of the edge palm touch information on the fringe area may be obtained, thus specifically disabling the touch input function of the corresponding subarea, and further improving the accuracy of touch input.

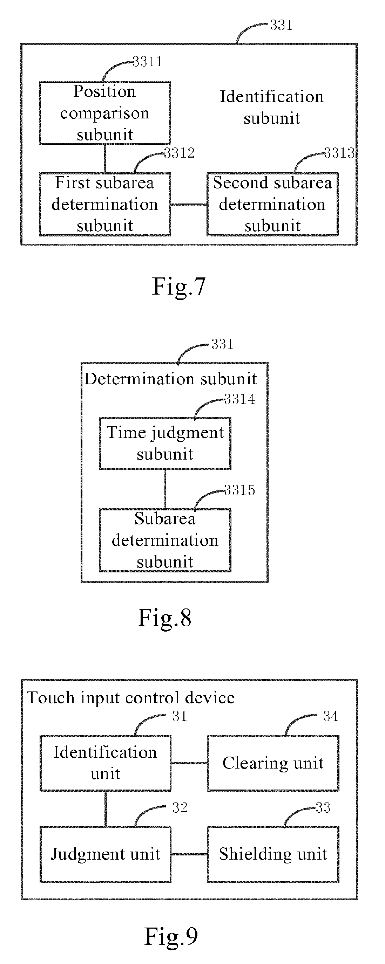

As shown in Fig. 7, which is a block diagram of another touch input control device according to an exemplary embodiment of the present disclosure, the embodiment is on the basis of the embodiment as shown in the foregoing Fig.6, and the determination sub module 331 may include: a position comparison sub module 3311, a first subarea determination sub module 3312 and a second subarea determination sub module 3313.

Wherein, the position comparison sub module 3311 is configured for comparing the position coordinates of the edge palm touch information with the range of coordinates of each subarea of the fringe area.

The first subarea determination sub module 3312 is configured to determine a first subarea corresponding to the coordinate range of the position coordinate as the corresponding subarea.

The second subarea determination sub module 3313 is configured to determine a second subarea associated with the first subarea as the corresponding subarea, the second subarea being a subarea in which a finger touch operation corresponding to the palm touch operation is when holding the terminal.

It should be noted that, for the convenience of illustration, in the embodiment as shown in above Fig.7, the determination sub module 331 includes both the first subarea determination sub module 3312 and the second subarea determination sub module 3313. While in actual application, the determination subunit may include either of the above subunits according to need, to which the embodiment makes no restriction.

In above embodiments, in addition to the first subarea corresponding to the range of the position coordinate according to the edge palm touch information, the corresponding subarea may also contain a second subarea to which the first subarea is associated and in which the finger touch operation corresponding to the palm touch operation is, thus ensuring flexible setting of the corresponding subarea according to users' habits of holding the terminal, not only improving the accuracy of touch input, but also enhancing users' touch experience.

As shown in Fig. 8, which is a block diagram of another touch input control device according to an exemplary embodiment of the present disclosure, the embodiment is on the basis of the embodiment as shown in the foregoing Fig.6 or Fig.7, and the determination sub module 331 may include: a time judgment sub module 3314 and a subarea determination sub module 3315.

Wherein, the time judgment sub module 3314 is configured for judging whether the duration of the palm touch operation on the touch screen is in excess of the preset time.

The subarea determination sub module 3315 is configured to determine a corresponding subarea of the edge palm touch information on the fringe area if the duration is in excess of the preset time.

In above embodiments, when the duration of the edge palm touch information on the touch screen is in excess of the preset time, it is determined the edge palm touch information as the touch information generated when users are holding the terminal, and then determined the corresponding subarea needed to disable the touch input function, thus identifying the corresponding subarea only while holding the terminal, and thereby improving the accuracy of disabling the touch input function of the corresponding subarea.

As shown in Fig. 9, which is a block diagram of another touch input control device according to an exemplary embodiment of the present disclosure, the embodiment is on the basis of the embodiment as shown in the foregoing Fig.3, and the device may also include: a clearing module 34, configured for clearing other palm touch information generated in the process of the palm touch operation exclusive of the edge palm touch information.

It should be noted that, the clearing module 34 in the device embodiment as shown in above Fig.9 may be contained in any device embodiment as shown in foregoing Figs.4-8, to which the present disclosure makes no restriction.

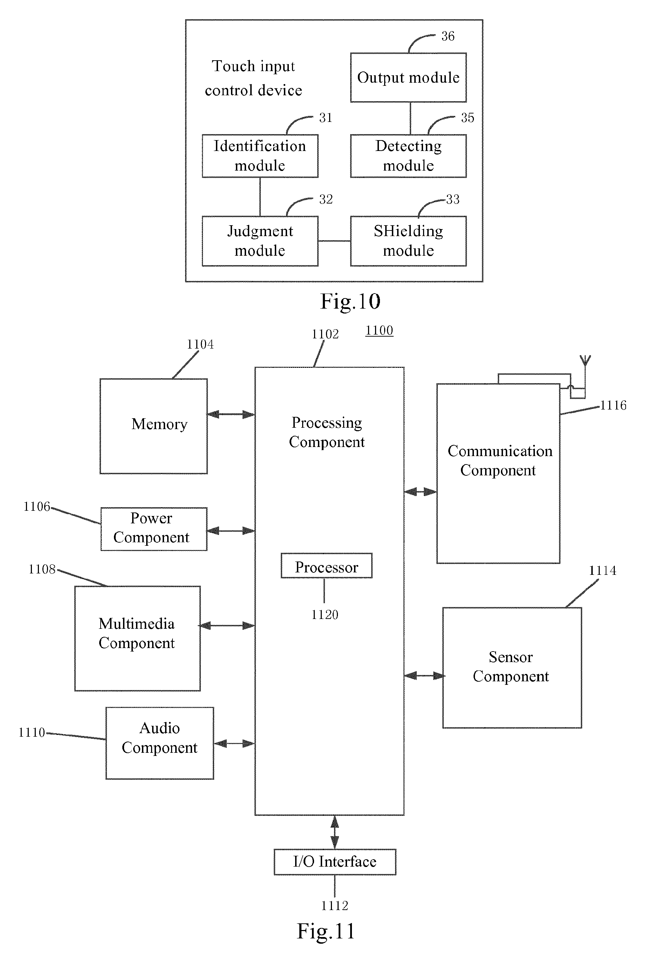

As shown in Fig. 10, which is a block diagram of another touch input control device according to an exemplary embodiment of the present disclosure, the embodiment is on the basis of the embodiment as shown in the foregoing Fig.3, and the device may also include: a detecting module 35 and an output module 36.

Wherein, the detecting module 35 is configured for detecting the finger touch operation area on the touch screen in holding the terminal.

The output module 36 is configured for outputting a virtual touch control interface in the finger touch operation area.

It should be noted that, the detecting module 35 and the output module 36 in the device embodiment as shown in above Fig.10 may be contained in any device embodiment as shown in foregoing Figs. 4-9, to which the present disclosure makes no restriction.

Specific implementations of functions and roles of the units in the above device may be referred to in detail the implementations of corresponding steps in above methods, not elaborated herein.

Device embodiments are substantially corresponding to method embodiments, so relevant parts may be referred to the method embodiments. Device embodiments set forth above are merely exemplary, wherein units described as separate parts may be or not be separated physically, and parts displayed as units may be or not be physical units, i.e., either located at the same place, or distributed on a plurality of network units. Modules may be selected in part or in whole according to actual needs for realization of solutions of the present disclosure. It is conceivable and executable for those of ordinary skill in the art without creative labor.

Correspondingly, the present disclosure also provides a touch input control device, and the touch input control device includes: a processor; a memory used for storing executable instructions by the processor. The processor is configured for: identifying edge touch information at the fringe area of the terminal touch screen; according to the touch shape corresponding to the edge touch information, judging whether the edge touch information includes edge palm touch information generated by palm touch operation; and shielding the edge palm touch information if the edge touch information includes the edge palm touch information.

Correspondingly, the present disclosure also provides a terminal, and the terminal includes: a memory, and one or more than one programs. The one or more than one programs are stored in the memory, and are executable by one or more than one processors, including instructions for following operations: identifying edge touch information at the fringe area of the terminal touch screen; according to the touch shape corresponding to the edge touch information, judging whether the edge touch information includes edge palm touch information generated by palm touch operation; and shielding the edge palm touch information if the edge touch information includes the edge palm touch information.

Fig. 11 shows another block diagram of a touch input control device 1100 according to an exemplary embodiment of the present disclosure. For example, the device 1100 may be a mobile telephone, a computer, a digital broadcasting terminal, a message transceiver device, a game console, a tablet device, a medical device, a fitness facility, a PDA (personal digital assistant) and the like.

Referring to Fig.11, the device 1100 may include one or a plurality of modules as below: a processor component 1102, a memory 1104, a power supply component 1106, a multimedia component 1108, an audio component 1110, an input/output (I/O) interface 1112, a sensor component 1114 and a communication component 1116.

The processor component 1102 usually controls the overall operation of the device 1100, for example, operation associated with display, telephone call, data communication, camera operation and record operation. The processor component 1102 may include one or a plurality of processors 1120 for executing instructions so as to complete steps of above method in part or in whole. In addition, the processor component 1102 may include one or a plurality of modules for the convenience of interaction between the processor component 1102 and other components. For example, the processor component 1102 may include a multimedia module for the convenience of interaction between the multimedia component 1108 and the processor component 1102.

The memory 1104 is configured for storing data of different types so as to support the operation of the device 1100. Examples of the data include instructions of any application program or method, contact data, phonebook data, message, picture and video, etc. for operation on the device 1100. The memory 1104 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 1106 provides power for components of the device 1100. The power supply component 1106 may include a power management system, one or a plurality of power supplies, and other components associated with power generation, management and distribution for the device 1100.

The multimedia component 1108 includes a screen between the device 1100 and a user for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor may not only sensor boundary of touching or sliding, but also detect the duration and pressure related to the touching or sliding operation. In some embodiments, the multimedia component 1108 includes a front-facing camera and/or a rear-facing camera. When the device 1100 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 1110 is configured for outputting and/or inputting audio signal. For example, the audio component 1110 includes a microphone (MIC). When the device 1100 is under an operation mode such as call mode, record mode and speech recognition mode, the microphone is configured for receiving external audio signal. The audio signal received may be further stored in the memory 1104 or sent out by the communication component 1116. In some embodiments, the audio component 1110 also includes a loudspeaker for outputting audio signal.

The input/output interface 1112 provides interface for the processor component 1102 and peripheral interface components, and the peripheral interface components may be a keyboard, a click wheel and buttons, etc. These buttons may include but not limited to: home page button, volume button, start button and locking button.

The sensor component 1114 includes one or a plurality of sensors for providing the device 1100 with state evaluation from all aspects. For example, the sensor component 1114 may detect the on/off state of the device 1100, relative positioning of components, for example, the components are the displayer and keypads of the device 1100. The sensor component 1114 may also detect the position change of the device 1100 or a component thereof, the presence or absence of users' touch on the device 1100, the direction or acceleration/deceleration of the device 1100, and temperature variation of the device 1100. The sensor component 1114 may also include a proximity detector, which is configured for detecting the presence of nearby objects in case of no physical touch. The sensor component 1114 may also include an optical sensor, for example, CMOS or CCD image sensor used for imaging. In some embodiments, the sensor component 1114 may also include an acceleration sensor, a gyro sensor, a magnetic sensor, a pressure sensor, a microwave sensor or a temperature sensor.

The communication component 1116 is configured for the convenience of wired communication or wired communication between the device 1100 and other equipment. The device 1100 is capable of gaining access to wireless network based on communication standards, for example, WiFi, 2G or 3G, or combination thereof. In an exemplary embodiment, the communication component 1116 receives via a broadcast channel the broadcast signal or broadcast-related information from external broadcast management systems. In an exemplary embodiment, the communication component 1116 also includes a near field communication (NFC) component for promoting short-range communication. For example, the NFC component may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 1100 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components configured to executing the above methods.

In exemplary embodiments, a non- transitory computer-readable storage medium including instructions is also provided, for example, a memory 1104 including instructions, which may be executed by the processors 1120 of the device 1100 so as to achieve the above methods. For example, the non-temporary computer-readable storage medium may be ROM, random access memory (RAM), CD-ROM, magnetic tape, floppy disk and optical data storage device, etc.

A non-transitory computer-readable storage medium may allow the terminal to execute a touch input control method when instructions in the storage medium are executed by the processor of the terminal. The method includes: identifying edge touch information at the fringe area of the terminal touch screen; according to the touch shape corresponding to the edge touch information, judging whether the edge touch information includes edge palm touch information generated by palm touch operation; and shielding the edge palm touch information if the edge touch information includes the edge palm touch information.

Other embodiments of the invention will be apparent to those skilled in the art from consideration of the specification and practice of the invention disclosed here.

## Claims

1. A touch input control method, **characterized in that** the method comprises:
identifying (101) edge touch information at a fringe area of a touch screen of a terminal;
according to a touch shape corresponding to the edge touch information, judging (102) whether the edge touch information includes edge palm touch information generated by a palm touch operation; and
shielding (103) the edge palm touch information if the edge touch information includes the edge palm touch information.

2. The method of claim 1, wherein the identifying (101) edge touch information at the fringe area of the touch screen of the terminal comprises:
obtaining touch information generated by a touch operation when a user conducts the touch operation on the touch screen of the terminal;
according to a position coordinate corresponding to the touch information, judging whether the touch operation is in the fringe area of the touch screen; and
determining the touch information as the edge touch information if the touch operation is in the fringe area of the touch screen.

3. The method of claim 1, wherein the according to the touch shape corresponding to the edge touch information, judging (102) whether the edge touch information includes edge palm touch information generated by palm touch operation comprises:
obtaining the touch shape corresponding to the edge touch information by means of touch spot distribution of touch operation on the fringe area;
judging whether the touch shape corresponding to the edge touch information is matched with the palm touch shape preset; and
determining that the edge touch information includes the edge palm touch information if the touch shape corresponding to the edge touch information is matched with the palm touch shape.

4. The method of claim 1, wherein the shielding (103) the edge palm touch information comprises:
determining (205) a corresponding subarea of the edge palm touch information on the fringe area; and
disabling (206) touch input function of the corresponding subarea.

5. The method of claim 4, wherein the determining (205) a corresponding subarea of the edge palm touch information on the fringe area comprises:
comparing a position coordinate of the edge palm touch information with a coordinate range of each subarea in the fringe area; and
determining a first subarea corresponding to the coordinate range of the position coordinate as the corresponding subarea.

6. The method of claim 5, wherein the determining (205) a corresponding subarea of the edge palm touch information on the fringe area further comprises:
determining a second subarea associated with the first subarea as the corresponding subarea, the second subarea being a subarea in which a finger touch operation corresponding to the palm touch operation is when the terminal is held.

7. The method of claim 4, wherein the determining (205) a corresponding subarea of the edge palm touch information on the fringe area comprises:
judging (204) whether duration of the palm touch operation on the touch screen is in excess of the preset time; and
determining a corresponding subarea of the edge palm touch information on the fringe area if the duration is in excess of the preset time.

8. The method of claim 1, wherein the method further comprises:
clearing other palm touch information generated in process of the palm touch operation exclusive of the edge palm touch information.

9. The method of any of claims 1 to 8, wherein the method further comprises:
detecting a finger touch operation area on the touch screen when the terminal is held; and
outputting a virtual touch control interface in the finger touch operation area.

10. A touch input control device, comprising:
an identification module (31) configured to identify edge touch information at the fringe area of a touch screen of a terminal;
a judgment module (32) configured to judge whether the edge touch information includes palm touch information generated by a palm touch operation according to a touch shape corresponding to the edge touch information; and
a shielding module (33) configured to shield the edge palm touch information if the edge touch information includes the edge palm touch information.

11. The device of claim 10, wherein the shielding module (33) comprises:
a determination sub module (331) configured to determine a corresponding subarea of the edge palm touch information on the fringe area; and
a disabling sub module (332) configured to disable touch input function of the corresponding subarea.

12. The device of claim 11, wherein the determination sub module (331) comprises:
a position comparison sub module (3311) configured to compare a position coordinate of the edge palm touch information with a coordinate range of each subarea of the fringe area; and
a first subarea determination sub module (3312) configured to determine a first subarea corresponding to the coordinate range of the position coordinate as the corresponding subarea.

13. The device of claim 12, wherein the determination sub module (331) further comprises:
a second subarea determination sub module (3313) configured to determine a second subarea associated with the first subarea as the corresponding subarea, the second subarea being a subarea in which a finger touch operation corresponding to the palm touch operation is when the terminal is held.

14. The device of claim 11, wherein the determination sub module (331) comprises:
a time judgment sub module (3314) configured to judge whether the duration of the palm touch operation on the touch screen is in excess of the preset time; and
a subarea determination sub module (3315) configured to determine a corresponding subarea of the edge palm touch information on the fringe area if the duration is in excess of the preset time.

15. A computer program, which when executing on a processor, performs the method according to any one of claims 1 to 9.

16. A computer program product stored on a computer usable medium, comprising computer-readable program means for causing a mobile phone to implement the method according to any one of claims 1 to 9.
